# EUROPEAN PATENT SPECIFICATION

(11) **EP 1 525 274 B1**
(45) Date of publication and mention of the grant of the patent: **21.03.2007**
(21) Application number: 03760606.8
(22) Date of filing: 12.06.2003
(51) Int. Cl.: C09D 167/02

(54) **SEMI-GLOSS POWDER COATING COMPOSITIONS**
HALB-GLÄNZENDE PULVERBESCHICHTUNGSZUSAMMENSETZUNGEN
COMPOSITIONS PULVERULENTES POUR REVETEMENTS SEMI-LUSTRES

(30) Priority: 19.06.2002 EP 02013609
(43) Date of publication of application: 27.04.2005
(73) Proprietor: CYTEC SURFACE SPECIALTIES, S.A., 1070 Bruxelles (BE)
(72) Inventor: MOENS, Luc, B-1640 St.Genesius-Rode (BE); KNOOPS, Nele, B-3020 Herent (BE); MAETENS, Daniel, B-1070 Bruxelles (BE)
(74) Representative: Destryker, Elise Martine
(86) International application number: PCT/EP2003/006162
(87) International publication number: WO 2004/000958

(56) References cited:
- EP-A- 0 664 325
- WO-A-96/00751
- US-A- 5 393 846
- US-B1- 6 184 311
- US-B1- 6 313 234

## Description

The present invention relates to powdered thermosetting compositions comprising as binder a co-reactable particulate mixture of a carboxyl group containing amorphous polyester, a glycidyl group containing acrylic copolymer and a curing agent having functional groups, reactable with the polyester carboxyl groups. The invention also relates to the use of said compositions for the preparation of powdered paints and varnishes which give semi gloss coatings with an adjustable gloss, providing an outstanding flow, excellent mechanical properties, good solvent resistance and weathering.

At the present time, powdered thermosetting compositions are widely used for coating the most various articles. Today the majority of these coating compositions provide coatings having a high gloss after fusion and curing which is in fact very often equal to or even greater than 90%.

There is an increasing demand for powdered paints and varnishes which provide coatings of good quality and with a reduced gloss, for example for coating certain accessories in the automotive industry, such as wheel rims, bumpers and the like, or for coating metal panels and beams used in construction.

Various methods for manufacturing powdered paints and varnishes that provide matt coatings have been proposed.

According to one of these methods, powder coating compositions comprising as a binder a co-reactable mixture of a carboxyl group containing amorphous polyester and a glycidyl group containing acrylic copolymer are proposed and disclosed in a number of patents.

For instance, U.S. Pat. No. 5,436,311 describes a low gloss powder thermosetting composition comprising as a binder a mixture of a linear carboxyl group containing polyester and a glycidyl group containing acrylic copolymer. The polyester has an acid number of 20 to 50 mg KOH/g. The acrylic copolymer has a number average molecular weight of from 4000 to 10000 and is obtained from 5 to 30% by weight glycidyl acrylate or glycidyl methacrylate and 70 to 95% by weight of methyl methacrylate whereby up to 25% by weight of the methyl methacrylate can be replaced by another vinyl monomer.

U.S. Pat. No. 5,407,706 describes a powder composition that provides low gloss upon curing. The composition comprises (A) a resin comprising from 10 to 90% weight of an acrylic resin having a viscosity of 100 to 800 poises at 140°C that is obtained by polymerising 10 to 50% weight of glycidyl acrylate or glycidyl methacrylate with 90 to 50% weight of a copolymerisable monomer and 90 to 10% weight of a further acrylic resin having a viscosity of 1000 to 5000 poises at 140°C that is prepared from defined comonomers, and (B) a polybasic acid compound having a viscosity of 100 to 2000 poises at 140°C. The equivalent ratio of the glycidyl groups to the acid groups of the polybasic acid compound may be from 1.5 to 0.5.

U.S. Pat. No. 5,744,522 describes a powder coating composition having a 60° gloss of less than about 60 which contains (A) a glycidyl group containing acrylic copolymer having a weight average molecular weight of from 2000 to 20000, (B) an aromatic carboxylic acid group containing polyester with an acid number of from 10 to 300 mg KOH/g and (C) a particular isocyanurate curing agent having carboxyl groups or derivatives thereof.

U.S. Pat. No. 6,310,139 deals with burnish resistant low gloss powder coating compositions comprising (A) a polyester having hydroxyl and carboxyl groups characterised by an acid and hydroxyl number of from 10 to 30 mg KOH/g, and a glass transition temperature of less than 55°C, (B) a glycidyl group containing acrylic copolymer having a number average molecular weight greater than 8000 and (C) a blocked isocyanate derivative for reacting with the hydroxyl groups of the polyester resin.

Despite the existing variability of these binder systems, the coatings derived all are subject to one or more disadvantages or shortcomings, mainly attributed to flexibility, gloss level or reproducibility.

Till now, powder coating compositions comprising as a binder a mixture of a glycidyl group containing acrylic copolymer and a carboxylic acid group containing amorphous polyester, whether or not in combination with a additional curing agent, allow for "dead matt" characteristics, which is indicated by a gloss as measured at a geometry of 60° according to the ASTM D523 standard of from 0 to 10%.

When higher gloss levels are aimed for, the mixture of different glycidyl group containing acrylic copolymers is suggested, as for example in U.S.Pat. No. 5,407,706 or U.S. Pat. No. 5,744,522, nevertheless not without the typical drawbacks such as gloss reproducibility.

It now has been surprisingly found that by using as a binder a co-reactable particular mixture of a carboxyl group containing amorphous polyester and a glycidyl group containing acrylic copolymer along with a stoechiometric excess of a curing agent having functional groups reactable with the polyesters' carboxylic acid groups, it is possible to obtain powdered thermosetting compositions which produce coatings with a reduced gloss in a reliable and reproducible way, along with good flexibility and solvent resistance. Moreover it has been observed that a variation of the stoechiometric excess of the reactive groups of the curing agent relative to the glycidyl groups of the acrylic copolymer, allows for an adjustable gloss level between about 10 and 70 as measured at a geometry of 60° according to the ASTM D523 standard in a reproducible way.

Thus, according to the present invention there are provided new thermosetting coating compositions comprising as binder a mixture of a carboxyl group containing polyester, a glycidyl group containing acrylic copolymer and a curing agent having functional groups reactable with the polyester carboxylic acid groups, characterised in that 100 parts by weight of this binder comprises:
- 40.0 to 90.0 parts by weight of a carboxyl functional polyester consisting of a carboxyl functional amorphous polyester composed of from 50 to 100% mole of terephthalic acid and from 50 to 0% mole of one or more aliphatic, cycloaliphatic or aromatic polyacid other than terephthalic acid , referring to the polyacid constituents, and of from 50 to 100% mole of neopentyl glycol or 2-butyl-2-ethyl-1.3-propanediol or their mixtures and from 0 to 50% mole of another aliphatic and/or cycloaliphatic polyol, referring to the polyol constituents;
- 10.0 to 60.0 parts by weight of a glycidyl group containing acrylic copolymer having a number average molecular weight of at least 5000 and composed of 10 to 90% mole of a glycidyl group containing monomer and from 90 to 10% mole of other monomers copolymerisable with the glycidyl group containing monomers; and
- 0.5 to 15.0 parts by weight of a curing agent having functional groups reactable with the polyester's carboxylic acid groups.
At the contrary of EP 00128097, the compositions of the present invention do not contain a carboxyl group containing semi-crystalline polyester.
The carboxyl functional amorphous polyesters of the present invention generally have an acid number from 15 to 100 mg KOH/g and preferably from 30 to 70 mg KOH/g. Preferably, the carboxyl functional amorphous polyesters further are characterised by:
- number averaged molecular weight ranging from 1100 to 15000 and more preferably from 1600 to 8500, measured by gel permeation chromatography (GPC);
- a glass transition temperature (Tg) from 40 to 80°C, measured by Differential Scanning Calorimetry according to ASTM D3418 with a heating gradient of 20°C per minute;
- an ICI (cone/plate) viscosity accordingly to ASTM D4287, measured at 200°C ranging from 5 to 15000 mPa.s.

The polyacid constituent of the amorphous polyester, according to the present invention, is for 50 to 100% mole, preferably for 50 to 90 % mole, composed of terephthalic acid , and for 0 to 50% mole, preferably for 10 to 50 % mole, of another constituent selected from one or more aliphatic, cycloaliphatic or aromatic polyacids, such as isophthalic acid, fumaric acid, maleic acid, phthalic anhydride, 1,4-cyclohexanedicarboxylic acid, 1,3-cyclohexanedicarboxylic acid, 1,2-cyclohexanedicarboxylic acid, succinic acid, adipic acid, glutaric acid, pimelic acid, suberic acid, azealic acid, sebacic acid, 1,12-dodecanedioic acid, trimellitic acid or pyromellitic acid, etc., or the corresponding anhydrides.

According to a first embodiment of the invention, the polyacid constituent of the amorphous polyester more preferably comprises from 50 to 90 % mole % of terephtalic acid or isophthalic acid or their mixtures and from 50 to 10 % mole of an aliphatic, cycloaliphatic or aromatic polyacid other than terephtalic acid or isophthalic acid. According to another embodiment of the invention, the polyacid constituent of the amorphous polyester more preferably comprises from 50 to 90 % mole % of terephtalic acid and from 10 to 50 % mole of an aliphatic, cycloaliphatic or aromatic polyacid other than terephtalic acid or isophthalic acid. In this case, the other polyacid is more preferably selected from adipic acid and trimellitic acid, and their mixtures.

According to yet another embodiment of the invention, the polyacid constituent of the amorphous polyester more preferably comprises from 50 to 90 % mole % of terephtalic acid, from 2 to 30 % mole of isophthalic acid and from 2 to 30 % mole of an aliphatic, cycloaliphatic or aromatic polyacid other than terephtalic acid or isophthalic acid. In this case, the other polyacid is more preferably adipic acid.

The glycol constituent of the amorphous polyester, according to the present invention, is for 50 to 100% mole composed of neopentyl glycol or 2-butyl-2-ethyl-1,3-propanediol or their mixtures and for 0 to 50% mole of another polyol constituent selected from one or more aliphatic and/or cycloaliphatic polyols, preferably selected from ethylene glycol, propylene glycol, 1.4-butanediol. 1,6-hexanediol, 1.4-cyclohexanediol. 1.4-cyclohexanedimethanol. 2-methyl-1,3-propanediol, 2-butyl-2-ethyl- 1,3-propanediol, hydrogenated Bisphenol A, hydroxypivalate of neopentyl glycol, trimethylolpropane, ditrimethylolpropane, pentaerythrytol.

The carboxylic acid group containing amorphous polyesters, according to the present invention, may be prepared using conventional esterification techniques well known in the art. The polyesters may be prepared according to a procedure consisting of one or more reaction steps.

For the preparation of these polyesters, a conventional reactor equipped with a stirrer, an inert gas (nitrogen) inlet, a thermocouple, a distillation column connected to a water-cooled condenser, a water separator and a vacuum connection tube may be used.

The esterification conditions used to prepare the polyesters generally are conventional, namely a standard esterification catalyst, such as dibutyltin oxide, dibutyltin dilaurate, n-butyltin trioctoate, sulphuric acid or a sulphonic acid, can be used in an amount from 0.05 to 1.50% by weight of the reactants and optionally, colour stabilisers, for example, phenolic antioxidants such as Irganox 1010 (Ciba) or phosphonite- and phosphite-type stabilisers such as tributylphosphite, can be added in an amount from 0 to 1% by weight of the reactants.

Polyesterification is generally carried out at a temperature which is gradually increased from 130°C to about 190 to 250°C, first under normal pressure, then, when necessary, under reduced pressure at the end of each process step, while maintaining these operating conditions until a polyester is obtained, which has the desired hydroxyl and/or acid number. The degree of esterification can be followed by determining the amount of water formed in the course of the reaction and the properties of the obtained polyester, for example the hydroxyl number, the acid number, the molecular weight or the viscosity.

When polyesterification is complete, cross-linking catalysts can optionally be added to the polyester while it is still in the molten state. These catalysts are added in order to accelerate cross-linking of the thermosetting powder composition during curing. Examples of such catalysts include amines (e.g. 2-phenylimidazoline), phosphines (e.g. triphenylphosphine), ammonium salts (e.g. tetrabutylammonium bromide or tetrapropylammonium chloride), phosphonium salts (e.g. ethyltriphenylphosphonium bromide or tetrapropylphosphonium chloride). These catalysts are preferably used in an amount of 0 to 5% with respect of the weight of the polyester.

The glycidyl group containing acrylic copolymers of the present invention generally have an epoxy equivalent weight of 0.3 to 6.0 and preferably from 1.0 to 4.0 milliequivalents of epoxy/gram of polymer.

Preferably, the glycidyl group containing acrylic copolymers are further characterised by:
- a number averaged molecular weight ranging from 5000 to 25000 and more preferably from 10000 to 20000;
- a glass transition temperature (Tg) from 40 to 85°C, measured by Differential Scanning Calorimetry (DSC), according to ASTM D3418 with a heating gradient of 20°C per minute;
- an ICI (cone/plate) viscosity determined by the ICI method at 200°C ranging from 60 to 50000 mPa.s;

The glycidyl group containing monomer used in the acrylic copolymer of the present invention is used in mole percentages ranging from 10 to 90 and is preferably selected from, for example, glycidyl acrylate, glycidyl methacrylate, methyl glycidyl methacrylate, methyl glycidyl acrylate, 3,4-epoxycyclohexylmethyl(meth)acrylate and acrylic glycidyl ether. They can be used singly or in combination of two or more.

The other monomers copolymerisable with the glycidyl group containing monomer are used in mole percentages ranging from 10 to 90 and are preferably selected from:
- 40 to 100 mole percentage of acrylic or methacrylic ester monomers such as methyl acrylate, ethyl acrylate, n-propyl acrylate, isopropyl acrylate, n-butyl acrylate, n-decyl acrylate, methyl methacrylate, ethyl methacrylate, n-propyl methacrylate, isopropyl methacrylate, n-butyl methacrylate, isobutyl methacrylate, n-amyl methacrylate, n-hexyl methacrylate, isoamyl methacrylate, allyl methacrylate, sec-butyl methacrylate, tert-butyl methacrylate, 2-ethylbutyl methacrylate, cinnamyl methacrylate, crotyl methacrylate, cyclohexyl methacrylate, cyclopentyl methacrylate, methallyl methacrylate, n-octyl methacrylate, 2-ethylhexyl methacrylate, 2-phenylethyl methacrylate and phenyl methacrylate, and their mixtures.
- 0 to 60 mole percentage of other ethylenically unsaturated copolymerisable monomers such as styrene, alkyl-substituted styrenes and chloro-substituted styrenes, acrylonitrile, vinyl chloride and vinylidene fluoride and vinyl acetate, and their mixtures.

The glycidyl group containing acrylic copolymer may be prepared by conventional polymerisation techniques, either in mass, in emulsion, or in solution in an organic solvent. The nature of the solvent is very little of importance, provided that it is inert and that it readily dissolves the monomers and the synthesised copolymer. Suitable solvents include toluene, ethyl acetate, butyl acetate, xylene, etc. The monomers are usually copolymerised in the presence of a free radical polymerisation initiator (benzoyl peroxide, dibutyl peroxide, azo-bis-isobutyronitrile, and the like) in an amount representing 0.1 to 4.0% by weight of the monomers.

To achieve a good control of the molecular weight and its distribution, a chain transfer agent, preferably of the mercaptan type, such as n-dodecylmercaptan, t-dodecanethiol, iso-octylmercaptan, or of the carbon halide type, such as carbon tetrabromide, bromotrichloromethane, etc., may also added in the course of the reaction. The chain transfer agent is generally used in amounts of up to 10% by weight of the monomers used in the copolymerisation.

A cylindrical, double walled reactor equipped with a stirrer, a condenser, an inert gas (nitrogen, for example) inlet and outlet, and metering pump feed systems is generally used to prepare the glycidyl group containing acrylic copolymer.

Polymerisation generally is carried out under conventional conditions. Thus, when polymerisation is carried out in solution, for example, an organic solvent is introduced into the reactor and heated to reflux temperature under an inert gas atmosphere (nitrogen, carbon dioxide, and the like) and a homogeneous mixture of the required monomers, free radical polymerisation initiator and chain transfer agent, when needed, is then added to the solvent gradually over several hours. The reaction mixture is then maintained at the indicated temperature for some hours, while stirring. The copolymer obtained is subsequently freed from the solvent in vacuo.

The curing agent having functional groups reactable with the polyesters' carboxyl groups is preferably selected from a polyepoxy compound and/or a β-hydroxyalkylamide containing compound.

The polyepoxy compound, which is generally solid at room temperature, contains at least two epoxy groups per molecule such as for example, triglycidyl isocyanurate (TGIC) like the one marketed under the tradename of Araldite PT810 or the mixture of diglycidyl terephthalate and triglycidyl trimellitate, like the one marketed under the tradename of Araldite PT910 or PT912.

The β-hydroxyalkylamide containing compound preferably answers the general structure as represented in Formula I. 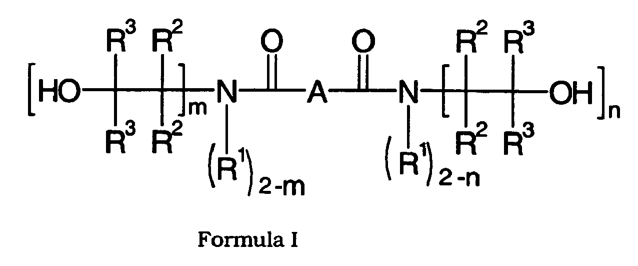 Wherein:
- A represents a mono- or polyvalent organic group derived from a saturated or unsaturated alkyl group with 1 to 60 carbon atoms (for example ethyl, methyl, propyl, butyl, pentyl, hexyl, heptyl, octyl, nonyl, decyl, eicosyl, triacontyl, tetracontyl, pentacontyl and hexacontyl); an aryl group (such as phenyl, naphtyl); a trialkene amino group with 1 to 4 carbon atoms per alkylene group (for example trimethylene amino and triethylene amino); or an unsaturated radical containing one or more alkenic groups (-C=C-) with 1 to 4 carbon atoms (such as ethenyl, 1-methyl ethenyl, 3-butenyl-1,3-diyl and 2-propenyl-1,2-diyl), carboxy-alkenyl group with 1 to 4 carbon atoms (for example 3-carboxy-2-propenyl), alkoxy carbonyl alkenyl with 1 to 4 carbon atoms (such as 3-methoxy carbonyl-2-propenyl)
- R¹ represents hydrogen, an alkyl group with 1 to 5 carbon atoms or a hydroxyalkyl group with 1 to 5 carbon atoms
- R² and R³ are the same or different and each independently represents hydrogen or a straight or branched alkyl group with 1 to 5 carbon atoms, while one of the groups R² and one of the groups R³ may also form, together with the adjacent carbon atoms, a cycloalkyl group.
- n and m, independently, have values from 1 to 2, preferably from 1.6 to 2.

A is preferably an C1 - C10 alkyl.

In a preferred embodiment of the present invention, the curing agent, having functional groups reactable with the polyesters' carboxylic acid groups, is a β-hydroxyalkylamide according to Formula II 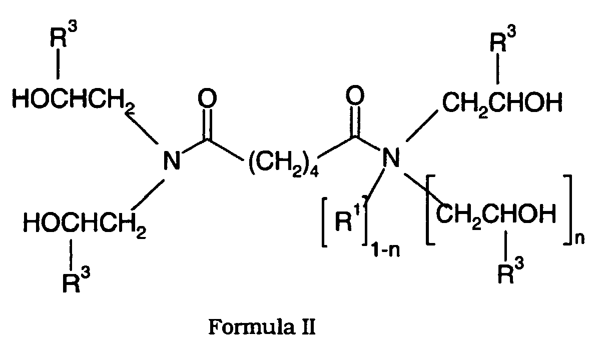 wherein n is from 0.2 to 1, R¹ is selected from hydrogen and alkyl groups with 1 to 5 carbon atoms and R³ is hydrogen (Primid XL552 from EMS) or a methyl group (Primid QM1260 from EMS).

The thermosetting powdered composition of the present invention, preferably comprises a binder which, for 100 parts by weight of binder, consists of:
- 40.0 to 90.0, preferably 60.0 to 80.0, parts by weight of the carboxyl functionalised amorphous polyester;
- 10.0 to 60.0, preferably 20.0 to 50.0, parts by weight of the glycidyl group containing acrylic copolymer; and
- 0.5 to 15.0, preferably 2.3 to 12.0, parts by weight of the curing agent.

In addition to the essential binder components described above, compositions within the scope of the present invention can also include one or more flow control agents such as Resiflow PV5 (Worlee), Modaflow (Monsanto), Acronal 4F (BASF), etc., one or more degassing agents such as benzoin (BASF) etc. and one or more fillers. To the formulation, one or more UV-light absorbers such as Tinuvin 900 (Ciba), hindered amine light stabilisers represented by Tinuvin 144 (Ciba), other stabilising agents such as Tinuvin 312 and 1130 (Ciba), antioxidants such as Irganox 1010 (Ciba) and stabilisers from the phosphonite or phosphite type can be added.

Both, pigmented systems as well as clear lacquers can be prepared.

A variety of dyes and pigments can be utilised in the composition of this invention. Examples of useful pigments and dyes are: metallic oxides such as titaniumdioxide, ironoxide, zincoxide and the like, metal hydroxides, metal powders, sulphides, sulphates, carbonates, silicates such as ammoniumsilicate, carbon black, talc, china clay, barytes, iron blues, leadblues, organic reds, organic maroons and the like.

The components of the composition according to the invention may be mixed by dry blending in a mixer or blender (e.g. drum mixer). The premix is then homogenised at temperatures ranging from 70 to 150°C in a single screw extruder such as the BUSS-Ko-Kneter or a double screw extruder such as the PRISM or APV. The extrudate, when cooled down, is ground to a powder with a particle size ranging from 10 to 150 µm. The powdered composition may be deposed on the substrate by use of a powder gun such as an electrostatic CORONA or a friction charging TRIBO spray gun. On the other hand well-known methods of powder deposition such as the fluidised bed technique can be used. After deposition the powder is heated to a temperature between 160 and 220°C. causing the particles to flow and fuse together to form a smooth, uniform, continuous, uncratered coating on the substrate surface.

The thermosetting powder composition according to the present invention may be used as a coating for metallic and non-metallic surfaces.

Entirely or partially coated substrates wherein the coating material used is a thermosetting powder coating composition according to invention are also an object of the present invention.

The following examples are submitted for a better understanding of the invention without being restricted thereto.

### Example 1 : Synthesis of a carboxylic acid group containing amorphous polyester

422.30 parts of neopentyl glycol is placed in a conventional four neck round bottom flask equipped with a stirrer, a distillation column connected to a water cooled condenser, an inlet for nitrogen and a thermometer attached to a thermoregulator.
The flask contents are heated, while stirring under nitrogen, to a temperature of circa 140°C at which point 573.15 parts of terephthalic acid, 30.17 parts of adipic acid and 1.25 parts of n-butyltintrioctoate are added. The reaction is continued at 240°C under atmospheric pressure until about 95% of the theoretical amount of water is distilled and a transparent hydroxyl functionalised prepolymer with following characteristics is obtained :

| | |
|---|---|
| AN | = 7.6 mg KOH/g |
| OHN | = 56.6 mg KOH/g |
| ICI^{175°C} (Cone/Plate) | = 2200 mPa.s |

To the first step prepolymer standing at 200°C. 110.14 parts of isophthalic acid is added. Thereupon, the mixture is gradually heated to 230°C. After a 2 hour period at 230°C and when the reaction mixture is transparent, 1.0 part of tributylphosphite and 1.0 part of n-butyltintrioctoate is added and a vacuum of 50 mm Hg is gradually applied. After 3 hours at 230°C and 50 mm Hg, following characteristics are obtained :

| | |
|---|---|
| AN | = 35.5 mg KOH/g |
| OHN | = 2.5 mg KOH/g |
| ICI^{200°C} (Cone/Plate) | = 5000 mPa.s |

The carboxyl functionalised polyester is cooled down to 180°C and the resin is discharged.

Accordingly the procedure as described in example 1 the polyesters of examples 2 to 8, answering the composition as in table 1, are prepared.

**Table 1**

| | Ex. 2 | Ex. 3 | Ex. 4 (*) | Ex. 5 (*) | Ex. 6 | Ex. 7 | Ex. 8 |
|---|---|---|---|---|---|---|---|
| Step 1 | | | | | | | |
| neopentyl glycol | 431.0 | 378.1 | 411.8 | 342.8 | 422.9 | 417.9 | 421.1 |
| ethyleneglycol | | | | 18.0 | | | |
| trimethylolpropane | | 30.9 | | | | 13.9 | |
| isophthalic acid | | 36.9 | | 50.2 | 60.2 | | |
| terephthalic acid | 632.6 | 548.2 | 537.3 | 452.0 | 541.5 | 637.3 | 606.1 |
| adipic acid | | | 59.7 | 55.8 | | | |
| acid number, mg KOH/g | 12 | 11 | 3 | 16 | 3 | 6 | 7 |
| hydroxyl number, mg KOH/g | 51 | 68 | 42 | 40 | 58 | 45 | 55 |
| viscosity (175°C) | 2990 | 3150 | 2940 | 1750 | 3000 | 6600 | 2500 |
| | | | | | | | |

| Step 2 | | | | | | | |
|---|---|---|---|---|---|---|---|
| isophthalic acid | 48.5 | 88.2 | | | | | 118.2 |
| adipic acid | 28.8 | 50.7 | | | 71.2 | 81.0 | |
| trimellitic anhydride | | | 119.5 | 81.2 | 46.2 | | |
| acid number, mg KOH/g | 22 | 48 | 69 | 65 | 46 | 30 | 34 |
| hydroxyl number, mg KOH/g | 3 | 4 | 7 | 9 | 9 | 5 | 3 |
| viscosity (200°C) | 7500 | 5800 | 2980 | 6020 ** | 9200** | 5600 | 4400 |
| Mn | 5600 | 2700 | 3200 | 2750 | 3450 | 5850 | 3200 |

| | | | | | | | |
|---|---|---|---|---|---|---|---|
| (*) For the preparation of the polyester of example 4 and 5, the reaction of trimellitic anhydride with the first step prepolymer is done at 190°C under atmospheric conditions. After two hours at 190°C the resin is discharged. (**) at 175°C | | | | | | | |

### Example 9: Preparation of the glycidyl group containing acrylic copolymer

80 parts of n-butyl acetate are brought in a double walled flask of 51 equipped with a stirrer, a water cooled condenser, an inlet for nitrogen and a thermocouple attached to a thermoregulator.
The flask content is then heated and stirred continuously while nitrogen is purged through the solvent. At a temperature of 125°C a mixture of 0.8 parts of tert-butylperoxybenzoate in 20 parts of n-butyl acetate are fed in the flask during 215 minutes with a peristaltic pump. 5 minutes after this start another pump is started with the feeding of a mixture of 22 parts of styrene, 24 parts of glycidyl methacrylate, 40 parts of butyl methacrylate and 14 parts of methyl methacrylate, during 180 minutes. The synthesis takes 315 minutes.
After evaporation of the n-butyl acetate an acrylic copolymer with following characteristics is obtained:

| | |
|---|---|
| ICI viscosity @200°C | 16000 mPa.s |
| Mn | 15000 |
| Mw | 38200 |

### Example 10 to 11

Accordingly the procedure as described in example 9, the acrylic copolymers of example 10 and example 11, answering the compositions as in table 2, were prepared.

**Table 2**

| | example 10 | example 11 |
|---|---|---|
| styrene | 12 | 22 |
| glycidyl methacrylate | 24 | 24 |
| butyl methacrylate | 20 | 40 |
| methyl methacrylate | 44 | 14 |
| n-butyl peroxybenzoate | 2.0 | 0.6 |
| Mn | 9300 | 22600 |
| Mw | 20400 | 52400 |
| ICI^{200°C}, mPa.s | 11000 | 30000 |

### Example 12

The polyesters and acrylic copolymers as illustrated above, are then formulated to a powder accordingly to the white paint formulation as given below.

| White paint formulation | |
|---|---|
| Binder | 74.00 |
| Kronos 2310 | 24.67 |
| Resiflow PV5 | 0.99 |
| Benzoin | 0.34 |

The powders are prepared first by dry blending of the different components and then by homogenisation in the melt using a PRISM 16 mm L/D 15/1 twin screw extruder at an extrusion temperature of 85°C. The homogenised mix is then cooled and ground in an Alpine UPZ100. Subsequently the powder is sieved to obtain a particle size between 10 and 110 µm. The powder thus obtained is deposited on cold rolled steel, by electrostatic deposition using the GEMA - Volstatic PCG 1 spray gun. At a film thickness between 50 and 80 µm the panels are transferred to an air-ventilated oven, where curing proceeds for 18 minutes at a temperature of 200°C.

The paint characteristics for the finished coatings obtained from the white powder formulation as given above, are reproduced in table 3 (Example 13 to 25).

**Table 3**

| | Polyester | GMA-acrylic | Curing agent | Gloss 60° | DI | RI | Solvent Resistance |
|---|---|---|---|---|---|---|---|
| Ex. 13 | Ex. 1 | Ex. 9 | XL552 | 10 | 200 | 200 | 100 |
| | 70.9 | 24.8 | 4.2 | | | | |
| Ex. 14 | Ex. 1 | Ex. 9 | XL552 6.2 | 20 | 200 | 200 | 120 |
| | 69.5 | 24.3 | | | | | |
| Ex. 15 | Ex. 2 | Ex. 9 | XL552 3.1 | 55 | 160 | 160 | 120 |
| | 78.6 | 18.3 | | | | | |
| Ex.16 | Ex. 4 | Ex. 9 | XL552 3.7 | 25 | 160 | 160 | 100 |
| | 53.0 | 43.3 | | | | | |
| Ex. 17 | Ex. 4 | Ex. 9 | XL552 10.2 | 40 | 120 | 100 | 120 |
| | 49.4 | 40.4 | | | | | |
| Ex.18 | Ex. 1 | Ex. 9 | QM1260 4.2 | 40 | 100 | 100 | 100 |
| | 71.0 | 24.8 | | | | | |
| Ex. 19 | Ex. 1 | Ex. 9 | TGIC 5.2 | 45 | 160 | 180 | 120 |
| | 70.2 | 24.6 | | | | | |
| Ex.20 | Ex. 1 | Ex. 10 | XL552 2.2 | 68 | 200 | 200 | 120 |
| | 72.4 | 25.4 | | | | | |
| Ex.21 | Ex. 3 | Ex. 11 | XL552 3.0 | 51 | 200 | 200 | 140 |
| | 61.3 | 35.7 | | | | | |
| Ex.22 | Ex.5 | Ex. 9 | XL552 7.2 | 35 | 180 | 160 | 140 |
| | 51.2 | 42.0 | | | | | |
| Ex.23 | Ex.6 | Ex. 9 | XL552 4.0 | 20 | 200 | 200 | 120 |
| | 60.0 | 36.0 | | | | | |
| Ex.24 | Ex.7 | Ex. 9 | XL552 6.2 | 25 | 200 | 200 | 100 |
| | 69.5 | 24.3 | | | | | |
| Ex.25 | Ex.8 | Ex.11 | XL552 4.0 | 40 | 200 | 200 | 120 |
| | 71.0 | 25.0 | | | | | |

In this table:
Column 1 : indicates the identification number of the formulation
Column 2 : indicates the type and quantity in weight% of amorphous polyester
Column 3 : indicates the type and quantity in weight% of acrylic copolymer
Column 4 : indicates the type and quantity in weight% of curing agent
Column 5 : indicates the 60° gloss, measured according to ASTM D523
Column 6 : indicates the direct impact strength according to ASTM D2794. The highest impact which does not crack the coating is recorded in kg.cm
Column 7 : indicates the reverse impact strength according to ASTM D2794. The highest impact which does not crack the coating is recorded in kg.cm
Column 8 : number of twofold rubbing movements (to and fro) with a cotton pad impregnated with MEK which does not detrimentally affect the appearance of the surface of the cured film

The coatings as obtained from the powder formulations of example 13 to 25, all prove to have a nice smooth finish with an reproducible reduced gloss level.

Besides, good flexibility and solvent resistance, the finishes obtained have an outstanding resistance to burnishing i.e. they do not change gloss upon marring, scratching or rubbing.

## Claims

1. Thermosetting coating compositions comprising as binder a mixture of a carboxyl group containing polyester, a glycidyl group containing acrylic copolymer and a curing agent having functional groups reactable with the polyester carboxylic acid groups, **characterised in that** 100 parts by weight of this binder comprises:
- 40.0 to 90.0 parts by weight of a carboxyl functional polyester consisting of a carboxyl functional amorphous polyester composed of from 50 to 100% mole of terephthalic acid and from 50 to 0% mole of one or more aliphatic, cycloaliphatic or aromatic polyacid other than terephthalic acid, referring to the polyacid constituents, and of from 50 to 100% mole of neopentyl glycol or 2-butyl-2-ethyl- 1.3-propanediol or their mixtures and from 0 to 50% mole of another aliphatic and/or cycloaliphatic polyol, referring to the polyol constituents;
- 10.0 to 60.0 parts by weight of a glycidyl group containing acrylic copolymer having a number average molecular weight of at least 5000 and composed of 10 to 90% mole of a glycidyl group containing monomer and from 90 to 10% mole of other monomers copolymerisable with the glycidyl group containing monomers; and
- 0.5 to 15.0 parts by weight of a curing agent having functional groups reactable with the polyester's carboxylic acid groups.

2. Composition according to claim 1, **characterised in that** the aliphatic, cycloaliphatic or aromatic polyacid other than terephthalic acid is selected from the group comprising isophthalic acid, fumaric acid, maleic acid, phthalic anhydride, 1,4-cyclohexanedicarboxylic acid, 1,3-cyclohexanedicarboxyhc acid, 1,2-cyclohexanedicarboxylic acid, succinic acid, adipic acid, glutaric acid, pimelic acid, suberic acid, azelaic acid, sebacic acid. 1, 12-dodecanedioic acid, trimellitic acid, pyromellitic acid, or the corresponding anhydrides, and the other aliphatic or cycloaliphatic polyol is selected from ethylene glycol, propylene glycol, 1,4-butanediol, 1,6-hexanediol, 1,4-cyclohexanediol, 1,4-cyclohexanedimethanol, 2-methyl-1,3-propanediol, 2-butyl-2-ethyl-1,3 propanediol, hydrogenated Bisphenol A, hydroxypivalate of neopentyl glycol, trimethylolpropane, ditrimethylolpropane, pentaërythrytol.

3. Composition according to any of claims 1 to 2, **characterised in that** the polyacid constituent of the carboxyl functional amorphous polyester comprises from 50 to 90 % mole % of terephtalic acid or isophthalic acid or their mixtures and from 50 to 10 % mole of an aliphatic, cycloaliphatic or aromatic polyacid other than terephtalic acid or isophthalic acid.

4. Composition according to any of claims 1 to 2. **characterised in that** the polyacid constituent of the carboxyl functional amorphous polyester comprises from 50 to 90 % mole % of terephtalic acid and from 10 to 50 % mole of an aliphatic, cycloaliphatic or aromatic polyacid other than terephtalic acid or isophthalic acid.

5. Composition according to any of claims 1 to 2, **characterised in that** the polyacid constituent of the carboxyl functional amorphous polyester comprises from 50 to 90 % mole % of terephtalic acid, from 2 to 30 % mole of isophthalic acid and from 2 to 30 % mole of an aliphatic, cycloaliphatic or aromatic polyacid other than terephtalic acid or isophthalic acid.

6. Composition according to any of claims 1 to 5, **characterised in that** the carboxyl functional amorphous polyester has following properties:
- an acid number from 15 to 100 mg KOH/g and preferably from 30 to 70 mg KOH/g;
- a number averaged molecular weight ranging from 1100 to 15000 and preferably from 1600 to 8500;
- a glass transition temperature (Tg) from 40 to 80°C;
- an ICI (cone/plate) viscosity at 200°C ranging from 5 to 15000 mPa.s.

7. Composition according to any of claims 1 to 6, **characterised in that** the glycidyl group containing monomer is selected from glycidyl acrylate, glycidyl methacrylate, methyl glycidyl methacrylate, methyl glycidyl acrylate, 3,4-epoxycyclohexylmethyl (meth)acrylate and acrylic glycidyl ether, used singly or in combination of two or more, and the other monomers copolymerisable with the glycidyl group containing monomers is selected from:
- 40 to 100 mole percentage of acrylic or methacrylic ester monomers such as methyl acrylate, ethyl acrylate, n-propyl acrylate, isopropyl acrylate, n-butyl acrylate, n-decyl acrylate, methyl methacrylate, ethyl methacrylate, n-propyl methacrylate, isopropyl methacrylate, n-butyl methacrylate, isobutyl methacrylate, n-amyl methacrylate, n-hexyl methacrylate, isoamyl methacrylate, allyl methacrylate, sec-butyl methacrylate, tert-butyl methacrylate, 2-ethylbutyl methacrylate, cinnamyl methacrylate, crotyl methacrylate, cyclohexyl methacrylate, cyclopentyl methacrylate, methallyl methacrylate, n-octyl methacrylate, 2-ethylhexyl methacrylate, 2-phenylethyl methacrylate and phenyl methacrylate, and their mixtures;
- 0 to 60 mole percentage of other ethylenically unsaturated copolymerisable monomers such as styrene, alkyl-substituted styrenes and chloro-substituted styrenes, acrylonitrile, vinyl chloride and vinylidene fluoride and vinyl acetate, and their mixtures.

8. Composition according to any of claims 1 to 7, **characterised in that** the glycidyl group containing acrylic copolymer has following properties:
- a number averaged molecular weight ranging from 5000 to 25000 and preferably from 10000 to 20000
- a glass transition temperature (Tg) from 40 to 85°C. measured by Differential Scanning Calorimetry (DSC), according to ASTM D3418 with a heating gradient of 20°C per minute
- an ICI (cone/plate) viscosity determined by the ICI method at 200°C ranging from 60 to 50000 mPa.s

9. Composition according to any of claims 1 to 8. **characterised in that** the curing agent is a polyexpoxy compound and/or a β-hydroxyalkylamide containing compound.

10. Composition according to any of claims 1 to 9, **characterised in that** the curing agent is a β-hydroxyalkylamide according to Formula II 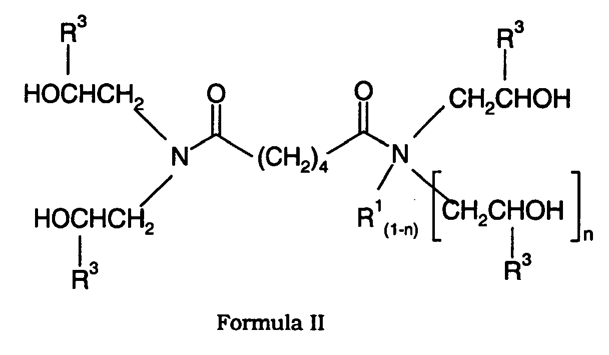 wherein n is from 0.2 to 1. R¹ is selected from hydrogen and alkyl groups with 1 to 5 carbon atoms and R³ is hydrogen or methyl.

11. Composition according to any of claims 1 to 10, **characterised in that** it comprises a binder which, for 100.0 parts by weight of binder, consists of
- 60.0 to 80.0 parts by weight of the carboxyl functionalised amorphous polyester;
- 20.0 to 50.0 parts by weight of the glycidyl group containing acrylic copolymer; and
- 2.3 to 12.0 parts by weight of a β-hydroxyalkylamide curing agent.

12. Composition according to any of claims 1 to 11 containing:
- one or more UV-light absorbers and/or hindered amine light stabilisers;
- one or more flow control agent;
- one or more degassing agent; and/or
- one or more pigment, dye and/or filler.

## Patentansprüche

1. Hitzehärtbare Beschichtungszusammensetzungen umfassend als Bindemittel ein Gemisch aus einem Carboxylgruppen-enthaltenden Polyester, einem Glycidylgruppen-enthaltenden Acrylcopolymer und einem Härtungsmittel mit funktionellen Gruppen, die mit den Polyestercarbonsäuregruppen umsetzbar sind, **dadurch gekennzeichnet, daß** 100 Gewichtsteile dieses Bindemittels:
- 40,0 bis 90,0 Gewichtsteile eines Carboxyl-funktionellen Polyesters, bestehend aus einem Carboxyl-funktionellen amorphen Polyester, bestehend aus 50 bis 100 mol-% Terephthalsäure und 50 bis 0 mol-% von einer oder mehreren aliphatischen, cycloaliphatischen oder aromatischen mehrbasigen anderen Säuren als Terephthalsäure, bezogen auf die Bestandteile der mehrbasigen Säure, und 50 bis 100 mol-% Neopentylglykol oder 2-Butyl-2-ethyl-1,3-propandiol oder ihren Gemischen und 0 bis 50 mol-% eines anderen aliphatischen und/oder cycloaliphatischen Polyols, bezogen auf die Polyolbestandteile,
- 10,0 bis 60,0 Gewichtsteile eines Glycidylgruppe-enthaltenden Acrylcopolymers mit einem zahlenmittleren Molekulargewicht von mindestens 5000 und bestehend aus 10 bis 90 mol-% eines Glycidylgruppen-enthaltenden Monomers und 90 bis 10 mol-% von anderen Monomeren, die mit den Glycidylgruppen-enthaltenden Monomeren copolymerisierbar sind; und
- 0,5 bis 15,0 Gewichtsteile eines Härtungsmittels mit funktionellen Gruppen, die mit den Carbonsäuregruppen des Polyesters umsetzbar sind, umfassen.

2. Zusammensetzung nach Anspruch 1, **dadurch gekennzeichnet, daß** die aliphatische, cycloaliphatische oder aromatische mehrbasige andere Säure als Terephthalsäure aus der Gruppe ausgewählt ist, bestehend aus Isophthalsäure, Fumarsäure, Maleinsäure, Phthalsäureanhydrid, 1,4-Cyclohexandicarbonsäure, 1,3-Cyclohexandicarbonsäure, 1,2-Cyclohexandicarbonsäure, Bernsteinsäure, Adipinsäure, Glutarsäure, Pimelinsäure, Korksäure, Azelainsäure, Sebacinsäure, 1,12-Dadecandisäure, Trimellithsäure, Pyromellithsäure oder den entsprechenden Anhydriden, und das andere aliphatische oder cycloaliphatische Polyol ausgewählt ist aus Ethylenglykol, Propylenglykol, 1,4-Butandiol, 1,6-Hexandiol, 1,4-Cyclohexandiol, 1,4-Cyclohexandimethanol, 2-Methyl-1,3-propandiol, 2-Butyl-2-ethyl-1,3-propandiol, hydriertem Bisphenol A, Hydroxypivalat von Neopentylglykol, Trimethylolpropan, Ditrimethylolpropan, Pentaerythritol.

3. Zusammensetzung nach einem der Ansprüche 1 bis 2, **dadurch gekennzeichnet, daß** der mehrbasige Säurebestandteil des Carboxyl-funktionellen amorphen Polyesters 50 bis 90 mol-% Terephthalsäure oder Isophthalsäure oder ihre Gemische und 50 bis 10 mol-% einer aliphatischen, cycloaliphatischen oder aromatischen mehrbasigen anderen Säure als Terephthalsäure oder Isophthalsäure umfaßt.

4. Zusammensetzung nach einem der Ansprüche 1 bis 2, **dadurch gekennzeichnet, daß** der mehrbasige Säurebestandteil des Carboxyl-fünktionellen amorphen Polyesters 50 bis 90 mol-% Terephthalsäure und 10 bis 50 mol-% einer aliphatischen, cycloaliphatischen oder aromatischen mehrbasigen anderen Säure als Terephthalsäure oder Isophthalsäure umfaßt.

5. Zusammensetzung nach einem der Ansprüche 1 bis 2, **dadurch gekennzeichnet, daß** der mehrbasige Säurebestandteil des Carboxyl-funktionellen amorphen Polyesters 50 bis 90 mol-% Terephthalsäure, 2 bis 30 mol-% Isophthalsäure und 2 bis 30 mol-% einer aliphatischen, cycloaliphatischen oder aromatischen mehrbasigen anderen Säure als Terephthalsäure oder Isophthalsäure umfaßt,

6. Zusammensetzung nach einem der Ansprüche 1 bis 5, **dadurch gekennzeichnet, daß** der Carboxyl-funktionelle amorphe Polyester folgende Eigenschaften aufweist:
- eine Säurezahl von 15 bis 100 mg KOH/g und bevorzugt 30 bis 70 mg KOH/g;
- ein zahlenmittleres Molekulargewicht zwischen 1100 und 15000 und bevorzugt 1600 und 8500;
- eine Glasübergangstemperatur (Tg) von 40 bis 80 °C;
- eine ICI-Viskosität (Kegel/Platte) bei 200 °C zwischen 5 und 15000 mPa · s.

7. Zusammensetzung nach einem der Ansprüche 1 bis 6, **dadurch gekennzeichnet, daß** das Glycidylgruppen-enthaltende Monomer ausgewählt ist aus Glycidylacrylat, Glycidylmethacrylat, Methylglycidylmethacrylat, Methylglycidylacrylat, 3,4-Epoxycyclohexylmethyl-(meth)acrylat und Acrylglycidylether, verwendet einzeln oder in Kombination aus zwei oder mehreren, und die anderen Monomere, die mit den Glycidylgruppen-enthaltenden Monomeren copolymerisierbar sind, ausgewählt sind aus:
- 40 bis 100 mol-% Acryl- oder Niethacrylsäureestermonorneren, wie Methylacrylat, Ethylacrylat, n-Propylacrylat, Isopropylacrylat, n-Butylacrylat, n-Decylacrylat, Methylmethacrylat, Ethylmethacrylat, n-Propylmethacrylat, Isopropylmethacrylat, n-Butylmethacrylat, Isobutylmethacrylat, n-Amylmethacrylat, n-Hexylmethacrylat, Isoamylmethacrylat, Allylmethacrylat, sec-Butylmethacrylat, tert-Butylmethaerylat, 2-Ethylbutylmethacrylat, Cinnamylmethacxylat, Crotylmethacrylat, Cyclohexylimethacrylat, Cyclopentylmethacrylat, Methallylmethactylat, n-Octylmethacrylat, 2-Ethylhexylmethacrylat, 2-Phenylethylmethacrylat und Phenylmethacrylat und ihren Gemischen;
- 0 bis 60 mol-% von anderen ethylenisch ungesättigten copolymerisierbaren Monomeren, wie Styrol, Alkyl-substituierten Styrolen und Chlor-substituierten Styrolen, Acrylnitril, Vinylchlorid und Vinylidenfluorid und Vinylacetat und ihren Gemischen.

8. Zusammensetzung nach einem der Ansprüche 1 bis 7, **dadurch gekennzeichnet, daß** das Glycidylgruppen-enthaltende Acrylcopolymer folgende Eigenschaften aufweist:
- ein zahlenmittleres Molekulargewicht zwischen 5000 und 25000 und bevorzugt 10000 und 20000,
- eine Glasübergangstemperatur (Tg) von 40 bis 85 °C, gemessen durch Differentialscanningkalorimetrie (DSC), gemäß ASTM D3418 mit einem Erhitzungsgradienten von 20 °C pro Minute,
- eine ICI-Viskosität (Kegel/Platte), bestimmt durch das ICI-Verfahren bei 200 °C zwischen 60 und 50000 mPa s.

9. Zusammensetzung nach einem der Ansprüche 1 bis 8, **dadurch gekennzeichnet, daß** das Härtungsmittel eine Polyepoxyverbindung und/oder eine β-Hydroxyalkylamid-enthaltende Verbindung ist.

10. Zusammensetzung nach einem der Ansprüche 1 bis 9, **dadurch gekennzeichnet, daß** das Härtungsmittel ein β-Hydroxyalkylamid gemäß der Formel II ist 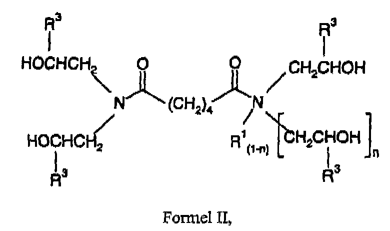 worin n 0,2 bis 1 ist, R¹ ausgewählt ist aus Wasserstoff und Alkylgruppen mit 1 bis 5 Kohlenstoffatomen und R³ Wasserstoff oder Methyl ist.

11. Zusammensetzung nach einem der Ansprüche 1 bis 10, **dadurch gekennzeichnet, daß** sie ein Bindemittel umfaßt, das für 100,0 Gewichtsteile an Bindemittel aus:
- 60,0 bis 80,0 Gewichtsteilen des Carboxyl-funktionalisierten amorphen Polyesters;
- 20,0 bis 50,0 Gewichtsteilen des Glycidylgruppen-enthaltenden Acrylcopolymers und
- 2,3 bis 12,0 Gewichtsteilen eines β-Hydroxyalkylamid-Härtungsmittels besteht.

12. Zusammensetzung nach einem der Ansprüche 1 bis 11, enthaltend:
- einen oder mehrere UV-Lichtabsorber und/oder Lichtstabilisatoren auf Basis eines gehinderten Amins;
- ein oder mehrer Fließkontrollmittel;
- ein oder mehrer Entgasungsmittel und/oder
- ein oder mehrere Pigmente, Farbstoffe und/oder Füllstoffe.

## Revendications

1. Composition de revêtement thermodurcissable comprenant comme liant un mélange d'un polyester à groupe carboxyle, d'un copolymère acrylique à groupe glycidyle et d'un agent de durcissement ayant des groupes fonctionnels pouvant réagir sur les groupes acide carboxylique du polyester, **caractérisée en ce que** 100 parties en poids de ce liant comprennent ;
- de 40,0 à 90,0 parties en poids d'un polyester à fonctionnalité carboxyle consistant en un polyester amorphe à fonctionnalité carboxyle composé de 50 à 100 % en moles d'acide téréphtalique et de 50 à 0 % en moles d'un ou de plusieurs polyacides aliphatiques, cycloaliphatiques ou aromatiques autres que l'acide téréphtalique, en se référant aux constituants polyacides, et de 50 à 100 % en moles de néopentyl glycol ou de 2-butyl-2-éthyl-1,3-propanediol ou de leurs mélanges, et de 0 à 50 % en moles d'un autre polyol aliphatique et/ou cycloaliphatique, en se référant aux constituants polyols ;
- de 10,0 à 60,0 parties en poids d'un copolymère acrylique à groupe glycidyle ayant une masse moléculaire moyenne en nombre d'au moins 5000 et composée de 10 à 90 % en moles d'un monomère à groupe glycidyle et de 90 à la % en moles d'autres monomères copolymérisables avec les monomères à groupe glycidyle ; et
- de 0,5 à 15,0 parties en poids d'un agent de durcissement ayant des groupes fonctionnels pouvant réagir sur les groupes acide carboxylique du polyester.

2. Composition suivant la revendication 1, **caractérisée en ce que** le polyacide aliphatique, cycloaliphatique ou aromatique autre que l'acide téréphtalique est choisi dans le groupe comprenant l'acide isophtalique, l'acide fumarique, l'acide maléique, l'anhydride phtalique, l'acide 1,4-cyclohexanedicarboxylique, l'acide 1,3-cyclohexanedicarboxylique, l'acide 1,2-eyclohexanedicarboxcyligue, l'acide succinique, l'acide adipique, l'acide glutarique, l'acide piméligue, l'acide subérique, l'acide azélaïque, l'acide sébacique, l'acide 1,12-dodécanedioïque, l'acide trimellitique, l'acide pyromellitique ou les anhydrides correspondantes, et l'autre polyol aliphatique ou cycloaliphatique est choisi parmi l'éthylène glycol, le propylène glycol, le 1,4-butanediol, le 1,6-hexanediol, le 1,4-cyclohexanediol, le 1,4-cyclohexanediméthanol, le 2-méthyl-1,3-propanediol, le 2-butyl-2-éthyl-1,3-propanediol, le bisphénol A hydrogéné, l'hydroxypivalate de néopentyl glycol, le triméthylolpropane, le ditriméthylolpropane, le pentaérythrite.

3. composition suivant l'une quelconque des revendications 1 à 2, **caractérisée en ce que** le constituant polyacide du polyester amorphe à fonctionnalité carboxyle comprend de 50 à 90 % en moles d'acide téréphtalique ou d'acide isophtalique ou de leurs mélanges, et de 50 à 10 % en moles d'un polyacide aliphatique, cycloaliphatique ou aromatique autre que l'acide téréphtalique ou l'acide isophtalique.

4. Composition suivant l'une quelconque des revendications 1 à 2, **caractérisée en ce que** le constituant polyacide du polyester amorphe à fonctionnalité carboxyle comprend de 50 à 90 % en moles d'acide téréphtalique et de 10 à 50 % en moles d'un polyacide aliphatique, cycloaliphatique ou aromatique autre que l'acide téréphtalique ou l'acide isophtalique.

5. Composition suivant l'une quelconque des revendications 1 à 2, **caractérisée en ce que** le constituant polyacide du polyester amorphe à fonctionnalité carboxyle comprend de 50 à 90 % en moles d'acide téréphtalique, de 2 à 30 % en moles d'acide isophtalique et de 2 à 30 % en moles d'un polyacide aliphatique, cycloaliphatique ou aromatique autre que l'acide téréphtalique ou l'acide isophtalique.

6. Composition suivant l'une quelconque des revendications 1 à 5, **caractérisée en ce que** le polyester amorphe à fonctionnalité carboxyle a des propriétés suivantes :
- un indice d'acide de 15 à 100 mg de KOH/g et, de préférence, de 30 à 70 mg de KOH/g;
- une masse moléculaire moyenne en nombre allant de 1100 à 15 000 et, de préférence, de 1600 à 8500 ;
- un point de transition à l'état vitreux (Tg) allant de 40 à 80°C ;
- une viscosité ICI (cône/plateau) à 200°C allant de 5 à 15 000 mPa.s.

7. Composition suivant l'une quelconque des revendications 1 à 6, **caractérisée en ce que** le monomère à groupe glycidyle est choisi parmi l'acrylate de glycidyle, le méthacrylate de glycidyle, le méthacrylate de méthyl glycidyle, l'acrylate de méthyl glycidyle, le (méth)acrylate de 3,4-époxycyclohexylméthyle et l'acrylate de glycidyle éther, utilisé seul ou en combinaison de deux ou de plusieurs, et les autres monomères copolymérisables avec les monomères à groupe glycidyle sont choisis parmi :
- de 40 à 100 % en moles de monomères d'ester acrylique ou méthacrylique, tel que l'acrylate de méthyle, l'acrylate d'éthyle, l'acrylate de n-propyle, l'acrylate d'isopropyle, l'acrylate de n-butyle, l'acrylate de n-décyle, le méthacrylate de méthyle, le méthacrylate d'éthyle, le méthacrylate de n-propyle, le méthacrylate d'isopropyle, le méthacrylate de n-butyle, le méthacrylate d'isobutyle, le méthacrylate de n-amyle, le méthacrylate de n-hexyle, le méthacrylate d'isoamyle, le méthacrylate d'allyle, le méthacrylate de sec-butyle, le méthacrylate de tert-butyle, le méthacrylate de 2-éthylbutyle, le méthacrylate de cinnamyle, le méthacrylate de crotyle, le méthacrylate de cyclohexyle, le méthacrylate de cyclopentyle, le méthacrylate de méthallyle, le méthacrylate de n-octyle, le méthacrylate de 2-éthylhexyle, le méthacrylate de 2-phényléthyle et le méthacrylate de phényle, et leurs mélanges ;
- de 0 à 60 pourcent en moles d'autres monomères copolymérisables à insaturation éthylénique, tels que le styrène, des styrènes à substitution alcoyle et des styrènes à substitution chlore, l'acrylonitrile, le chlorure de vinyle et le fluorure de vinylidène et l'acétate de vinyle, et leurs mélanges.

8. Composition suivant l'une quelconque des revendications 1 à 7, **caractérisée en ce que** le copolymère acrylique à groupe glycidyle a des propriétés suivantes :
- une masse moléculaire moyenne en nombre allant de 5000 à 25 000 et, de préférence, de 10 000 à 20 000,
- un point de transition à l'état vitreux (Tg) de 40 à 85°C, mesuré par analyse calorimétrique différentielle (DSC) suivant la norme ASTM D3418, avec un gradient de chauffage de 20°C à la minute,
- une viscosité ICI (cône/plateau), déterminée par le procédé ICI à 200°C, allant de 60 à 50 000 mPa.s.

9. Composition suivant l'une quelconque des revendications 1 à 8, **caractérisée en ce que** l'agent de durcissement est un composé polyépoxy et/ou un composé contenant un β-hydroxyalkylamide.

10. Composition suivant l'une quelconque des revendications 1 à 9, **caractérisée en ce que** l'agent de durcissement est un β-hydroxya1kylamide suivant la Formule II 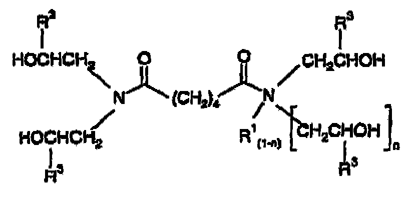 dans laquelle n va de 0,2 à 1, R¹ est choisi parmi l'hydrogène et des groupes alkyles ayant de 1 à 5 atomes de carbone, et R³ est hydrogène ou méthyle.

11. Composition suivant l'une quelconque des revendications 1 à 10, **caractérisée en ce qu'**elle comprend un liant qui, pour 100,0 parties en poids de liant, consiste en :
- de 60,0 à 80,0 parties en poids du polyester amorphe à fonctionnalité carboxyle ;
- de 20,0 à 50,0 parties en poids du copolymère acrylique à groupe glycidyle ; et
- de 2,3 à 12,0 parties en poids d'un β-hydroxyalkylamide servant d'agent de durcissement.

12. Composition suivant l'une quelconque des revendications 1 à 11, contenant :
- un ou plusieurs agents absorbant la lumière UV et/ou agents de stabilisation à la lumière à base d'amines à empêchement stérique ;
- un ou plusieurs agents de réglage de l'écoulement ;
- un ou plusieurs agents de dégazage ; et/ou
- un ou plusieurs pigments, colorants et/ou charges.
